# EUROPEAN PATENT SPECIFICATION

(11) **EP 4 503 291 B1**
(45) Date of publication and mention of the grant of the patent: **13.05.2026**
(21) Application number: 23780512.2
(22) Date of filing: 28.03.2023
(51) Int. Cl.: H01M 50/296, H01M 50/298, H01R 11/11, H01R 11/12

(54) **BATTERY PACK**
BATTERIEPACK
BLOC-BATTERIE

(30) Priority: 31.03.2022 JP 2022059930
(43) Date of publication of application: 05.02.2025
(73) Proprietor: HONDA MOTOR CO., LTD., Tokyo 105-8404 (JP)
(72) Inventor: TABUCHI Yuya, Wako-shi, Saitama 351-0193 (JP); ITO Keiichi, Tokyo 107-8556 (JP); FUKUDA Takeo, Wako-shi, Saitama 351-0193 (JP)
(74) Representative: Dehns
(86) International application number: PCT/JP2023/012487
(87) International publication number: WO 2023/190503

(56) References cited:
- WO-A1-2021/010433
- JP-A- 2007 137 389
- JP-A- 2015 002 131
- JP-A- 2015 069 953
- JP-A- 2017 091 676
- JP-A- 2017 091 676

## Description

### TECHNICAL FIELD

The present invention relates to a battery pack with a connecting terminal.

### BACKGROUND ART

The present applicant has proposed in WO 2021/010433 A1 a battery pack having a connector that can be connected to a male connecting terminal of an electric vehicle. A female connecting terminal of the connector is connected to the male connecting terminal of the electric vehicle, whereby electric power and information is exchanged between the battery pack and the electric vehicle via a battery management unit. JP 2017 091676 discloses a wiring module comprising a power transmission member connected to an electrode terminal of a power storage element, and an insulation protector separating the power transmission member from a detection line connected to power storage elements.

### SUMMARY OF THE INVENTION

A fastening site where the connector is fastened to a case of the battery pack requires fastening strength. A sealing member for waterproof is arranged around the above fastening portion. Therefore, when the aforementioned fastening strength and the arrangement of the sealing member are considered, an intermediate connecting member (intermediate terminal) that electrically connects a harness and a connecting terminal of the connector often has a small degree of freedom in layout. Therefore, a structure capable of avoiding interference with peripheral components is required for the intermediate connecting member.

For example, in a case that the intermediate connecting member is partially notched to avoid interference with peripheral components, the notch reduces an area of a passage cross-section of the electric current flowing between the connector and the harness, resulting in that the conduction resistance increases. Therefore, regarding the battery pack, an intermediate connecting member for connecting the connecting terminal of the connector and the harness with each other is desired to have a structure capable of suppressing an increase in current resistance while connecting the connecting terminal and the harness while avoiding interference with peripheral components.

A battery pack comprising a battery core pack that includes a plurality of battery cells, a case that accommodates the battery core pack, a connecting terminal that is arranged at one end of the case and is configured to be connected to an external device, a support member that is held by the case and supports the connecting terminal, and an intermediate connecting member that is held by the support member and electrically connects the connecting terminal and a harness electrically connected to the battery core pack, wherein the intermediate connection member is formed of a metal plate and includes a main body that extends in a first direction, which is an extending direction of an end portion of the harness, a harness connecting portion that is formed at one end in an extending portion of the main body and to which the end portion of the harness is connected, and a terminal connecting portion that is formed at another end in the extending direction of the main body, is arranged to be shifted with respect to the end portion in a second direction orthogonal to the first direction, and is connected to the connecting terminal, and the main body has a flat shape along the second direction, and includes a first extending end portion that extends along the first direction from the harness connecting portion toward the terminal connecting portion, a second extending end portion that extends in the first direction from the terminal connecting portion toward the harness connecting portion and is arranged to be shifted in the second direction with respect to the first extending end portion, and a shifting portion that connects the first extending end portion and the second extending end portion with each other characterized in that: the terminal connecting portion is secured in the first direction with respect to a pedestal of the support member with a fastening member, and characterized in that the pedestal includes a fastening portion including a fastening surface on which the terminal connecting portion abuts and is fastened in the first direction, and a holding portion that is orthogonal to the fastening surface of the fastening portion, extends along the first direction, and faces the main body.

According to the present invention, by providing the shifting portion at the intermediate connecting member to which the end portion of the harness is connected, it is possible to electrically connect the intermediate connecting member via the terminal connecting portion to the connecting terminal that is shifted in the second direction with respect to the end portion. By forming the main body flat in the second direction to have a cross-sectional area for a sufficient amount of electric current to pass through, it is possible to make the electric power reliably flow from the battery core pack to the connecting terminal via the intermediate connecting member. That is, the connection of the intermediate connecting member to the connecting terminal can be reliably performed while the conduction resistance when the current flows can be suppressed.

### BRIEF DESCRIPTION OF THE DRAWINGS

[FIG. 1] FIG. 1 is an external perspective view of a battery pack according to an embodiment of the present invention.
[FIG. 2] FIG. 2 is a plan view of a support member of the battery pack of FIG. 1.
[FIG. 3] FIG. 3 is a cross-sectional view taken along the line III-III of FIG. 2.
[FIG. 4] FIG. 4 is an enlarged plan view of the vicinity of a first intermediate connecting member of FIG. 2.
[FIG. 5] FIG. 5 is an enlarged cross-sectional view of a first intermediate connecting member of FIG. 3 near a corner portion.
[FIG. 6] FIG. 6 is an enlarged cross-sectional view showing the vicinity of a first pedestal of a support member according to the modified example.
[FIG. 7] FIG. 7 is an external perspective view showing a first intermediate connecting member of an intermediate connecting portion.
[FIG. 8] FIG. 8 is a plan view of the first intermediate connecting member shown in FIG. 7.
[FIG. 9] FIG. 9 is a side view of the first intermediate connecting member shown in FIG. 7.

### DETAILED DESCRIPTION OF THE INVNETION

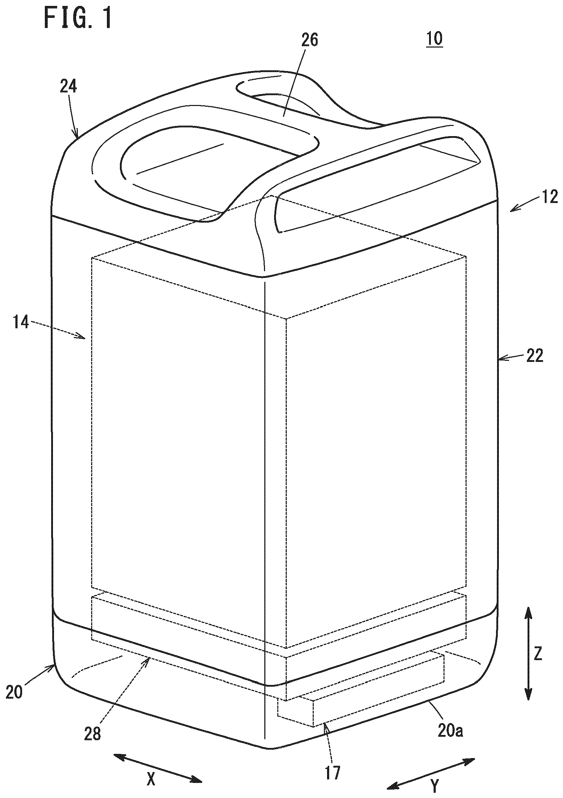

As shown in FIG. 1, a battery pack 10 according to the present embodiment can be applied as a portable battery pack that is mounted in an attachable and detachable manner in an electric vehicle (not shown) such as an electric assist bicycle or an electric motorcycle. The battery pack 10 can be applied to various external devices that require power. An example in which the battery pack 10 is mounted in an electric vehicle will be described below. The up-down direction of the battery pack 10 is the vertical direction when the battery pack 10 is mounted in an electric vehicle, or a direction inclined with respect to the vertical direction.

As shown in FIG. 1, the battery pack 10 includes a case 12, a battery core pack 14, and a connector structure 17.

The case 12 is formed of a metal material such as aluminum or a resin material, for example. The case 12 accommodates the battery core pack 14 and the support member 18. The case 12 has a bottom case 20, an outer case 22, and a top case 24. The axial direction of the case 12 shown in FIG. 1 is referred to as the third direction (arrow Z direction).

The bottom case 20 is placed at a lower part of the case 12. The bottom case 20 covers the bottom of the battery core pack 14. The outer case 22 is formed in a hollow shape and is attached to an upper end portion of the bottom case 20. The outer case 22 covers the side surfaces of the battery core pack 14. The top case 24 is attached to an upper end portion of the outer case 22. The top case 24 covers an upper portion of the battery core pack 14. An upper portion of the top case 24 is provided with a handle 26. The handle 26 is graspable when a user carries the battery pack 10.

Inside the case 12, a battery management unit (BMU) 28 is housed. The battery management unit 28 controls charging and discharging of the battery core pack 14 and communicates with external devices such as electric vehicles. The battery management unit 28 is connected to battery cells (not shown) of the battery core pack 14.

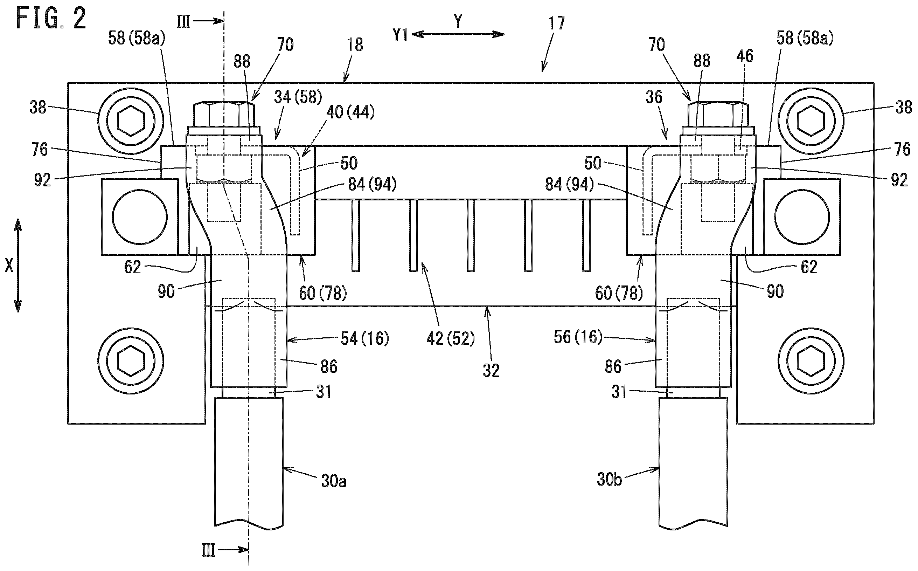

The battery management unit 28 is electrically connected to an intermediate connection portion 16 via a set of harnesses 30a, 30b shown in FIG. 2. The battery management unit 28 is electrically connectable to the electric vehicle via the intermediate connection portion 16 shown in FIG. 2. The extending direction of end portions 31 of the harnesses 30a, 30b connected to the intermediate connecting portion 16 (the first and second intermediate connecting members 54, 56) shown in FIG. 2 is referred to as a first direction (arrow-X direction).

The battery core pack 14 shown in FIG. 1 is housed and held inside the case 12. The battery core pack 14 is covered by the case 12. The battery core pack 14 holds a plurality of battery cells via a cell holder (not shown). The battery cell is, for example, a lithium secondary battery that can be repeatedly charged and discharged. The battery core pack 14 is electrically connected with the battery management unit 28. The connector structure 17 is provided in the bottom case 20.

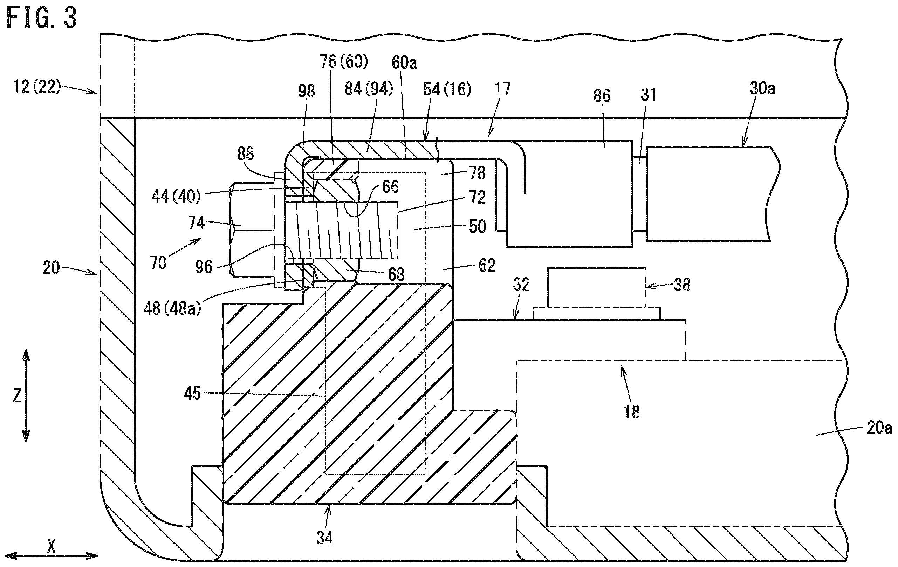

As shown in FIGS. 1 and 2, the connector structure 17 has the support member 18. The support member 18 is formed of a resin material. The support member 18 is disposed along a width direction (arrow-Y direction, which will be referred to as a second direction hereinafter) orthogonal to the axial direction of the case 12. As shown in FIG. 2, the support member 18 has a support base 32 and a pair of first and second pedestals 34, 36. The support base 32 is placed along a bottom 20a of the bottom case 20. The support base 32 is secured to the bottom 20a of the bottom case 20 with a plurality of securing bolts 38 (see FIG. 3). At this time, a seal member (not shown) is sandwiched between the support base 32 and the bottom case 20. The seal member prevents moisture and the like from entering the case 12 from the outside of the case 12. The support member 18 is secured to the case 12, for example, at a position where the securing bolts 38 avoids the sealing member.

The connector structure 17 further includes a power connection portion 40 and a signal connection portion 42. The support base 32 supports the power connection portion 40 and the signal connection portion 42. The power connection portion 40 has a pair of first and second connecting terminals 44, 46. The first and second connecting terminals 44, 46 are made of metal and are supplied with power from the battery cell via the intermediate connecting portion 16 described later.

As shown in FIG. 2, the first connecting terminal 44 is placed at one end in the width direction of the support base 32. The second connecting terminal 46 is arranged at the other end of the support base 32 in the width direction. In the second direction (arrow-Y direction) of the support base 32, the first connecting terminal 44 and the second connecting terminal 46 are symmetrical. The configuration of the first connecting terminal 44 will be described below, and the detailed description of the configuration of the second connecting terminal 46 will be omitted.

As shown in FIGS. 3 to 5, the first connecting terminal 44 has a contact portion 48 and a supported portion 50. The contact portion 48 has a contact surface 48a that makes contact with the intermediate connection portion 16. The contact portion 48 is held by a fastening portion 58 of the first pedestal 34, which will be described later. The supported portion 50 is bent at a right angle from a width-direction end of the fastening portion 58 by a bending process. The supported portion 50 is held by a holding portion 60 of the first pedestal 34, which will be described later. The first connecting terminal 44 has an L-shape when viewed from the axial direction of the case 12 shown in FIG. 3.

The supported portion 50 protrudes downward from the support base 32 (see FIG. 3). A lower portion 45 of the first connecting terminal 44 is formed in a plate spring shape and is accommodated in an accommodating space (not shown) formed in a lower portion of the support base 32. When the battery pack 10 is accommodated in a battery pack accommodating portion of the electric vehicle (not shown), the first connecting terminal 44 is electrically connected to a connector provided on the electric vehicle side. The power of the battery pack 10 can be supplied to a driving motor of the electric vehicle via the first connecting terminal 44.

As shown in FIG. 2, the signal connection portion 42 has a plurality of third connecting terminals 52. The third connecting terminal 52 is made of metal and connected to the battery management unit 28. The third connecting terminal 52 is placed between the first connecting terminal 44 and the second connecting terminal 46, equidistant from them in the width direction. The third connecting terminal 52 extends in the up-down direction (the arrow-Z direction in FIG. 1) of the battery pack 10 shown in FIG. 1. When the battery pack 10 is accommodated in the battery pack accommodating portion of the electric vehicle, the third connecting terminal 52 is electrically connected to the connector provided on the electric vehicle side. Vehicle information and the like are communicated between the electric vehicle and the battery pack 10 via the third connecting terminal 52.

As shown in FIG. 2, the first and second pedestals 34, 36 project from the support base 32 toward the outer case 22 (see FIG. 1). The first pedestal 34 is placed at one end in the width direction of the support base 32. The first pedestal 34 holds the first connecting terminal 44. The first intermediate connecting member 54 of the intermediate connecting portion 16 is connected to the first pedestal 34. The second pedestal 36 is disposed at the other end in the width direction of the support base 32. The second pedestal 36 holds the second connecting terminal 46. The second intermediate connecting member 56 of the intermediate connecting portion 16 is connected to the second pedestal 36.

The first pedestal 34 and the second pedestal 36 are arranged at positions avoiding the seal member (not shown). As shown in FIG. 2, the first pedestal 34 and the second pedestal 36 are symmetrical in the second direction (arrow-Y direction) of the support base 32. The first pedestal 34 will be described below, and the detailed description of the second pedestal 36 will be omitted.

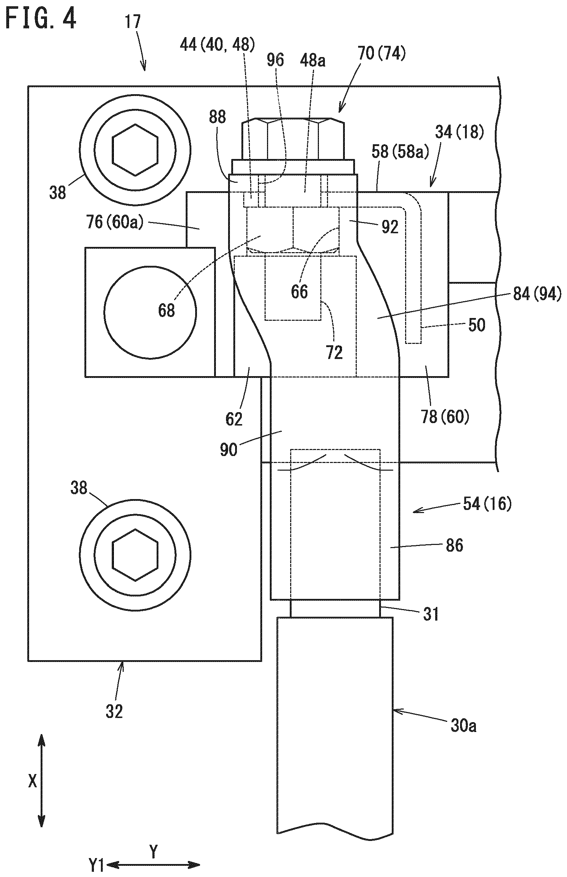

As shown in FIGS. 3 and 4, the first pedestal 34 has a fastening portion 58, a holding portion 60, and a space portion 62. The first pedestal 34 holds the first connecting terminal 44 and is connected with the first intermediate connecting member 54 of the intermediate connecting portion 16.

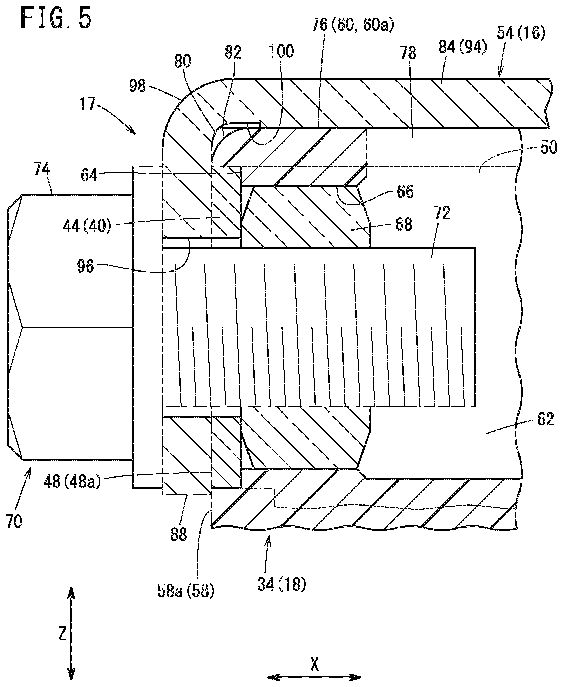

The fastening portion 58 is disposed at the tip along the first direction (arrow-X direction) at the first pedestal 34. The fastening portion 58 has a fastening surface 58a to which the first intermediate connecting member 54 is fastened. The fastening portion 58 extends from the support base 32 in the third direction (arrow-Z direction). The fastening surface 58a is placed at the tip along the first direction of the fastening portion 58. The fastening surface 58a is formed flat along the second direction (arrow-Y direction) and the third direction (arrow-Z direction). As shown in FIG. 3, the fastening surface 58a has an accommodating portion 64 (see FIG. 5) that is dented from the fastening surface 58a toward the harness 30a. The contact portion 48 of the first connecting terminal 44 is accommodated in the accommodating portion 64.

As shown in FIG. 5, the fastening surface 58a of the fastening portion 58 and the contact surface 48a of the first connecting terminal 44 in the first direction are flush with each other. That is, the contact surface 48a does not project from the fastening surface 58a in the first direction (arrow-X direction).

As shown in FIGS. 4 and 5, the terminal connecting portions 88 of the first intermediate connecting member 54, which will be described later, abut on the fastening surfaces 58a of the fastening portions 58. At this time, the first intermediate connecting member 54 is in contact with the contact surface 48a of the first connecting terminal 44 at the fastening portion 58.

Inside the fastening portion 58, there is provided a hole portion 66 that extends from the accommodating portion 64 further toward the harness 30a. The hole portion 66 communicates with the space portion 62. A nut 68 is held in the hole portion 66 (see FIG. 5). When the first intermediate connecting member 54 is fastened to the fastening portion 58, a threaded portion 72 of the fastening bolt 70 as the fastening member is screwed into the nut 68. The first intermediate connecting member 54 is fastened to the fastening surface 58a of the fastening portion 58 by a head portion 74 of the fastening bolt 70.

As shown in FIGS. 3 and 4, the holding portion 60 is provided at an upper portion of the first pedestal 34. The holding portion 60 has a holding surface 60a that is formed flat along the second direction (arrow-Y direction) and is parallel to the support base 32. The holding surface 60a of the holding portion 60 and the fastening surface 58a of the fastening portion 58 are orthogonal to each other (see FIG. 5). A main body 84 of the first intermediate connecting member 54, which will be described later, abuts on and is placed in contact with the holding surface 60a.

The holding portion 60 has a first holding site 76 and a second holding site 78. The first holding site 76 is linearly arranged with the fastening portion 58 along the first direction (arrow-X direction). The first holding site 76 is arranged in the direction of the harness 30a along the first direction with respect to the fastening portion 58. The second holding site 78 is placed apart from the fastening portion 58 relative to the first holding site 76. The second holding site 78 is disposed inward in the width direction (toward the second pedestal 36 in FIG. 2) with respect to the first holding site 76. As shown in FIG. 4, the first holding site 76 and the second holding site 78 are arranged to be shifted in the second direction (arrow-Y direction).

The supported portion 50 of the first connecting terminal 44 is held inside the first and second holding sites 76, 78. The supported portion 50 is held along the first direction at the second holding site 78.

As shown in FIG. 5, a corner portion 80 is provided at the boundary between the fastening portion 58 and the first holding site 76. The outer surface of the corner portion 80 is formed in a circular arc shape in cross section. The corner portion 80 has a notch portion 82 cut inward from the outer surface. The notch portion 82 is a concave portion dented radially inward from the outer surface of the corner portion 80. The sectional shape of the notch portion 82 is arc-shaped. When the first intermediate connecting member 54 is connected to the first pedestal 34, the notch portion 82 faces a corner portion 98 of the first intermediate connecting member 54. The notch portion 82 acts as a relief away from the corner portion 98.

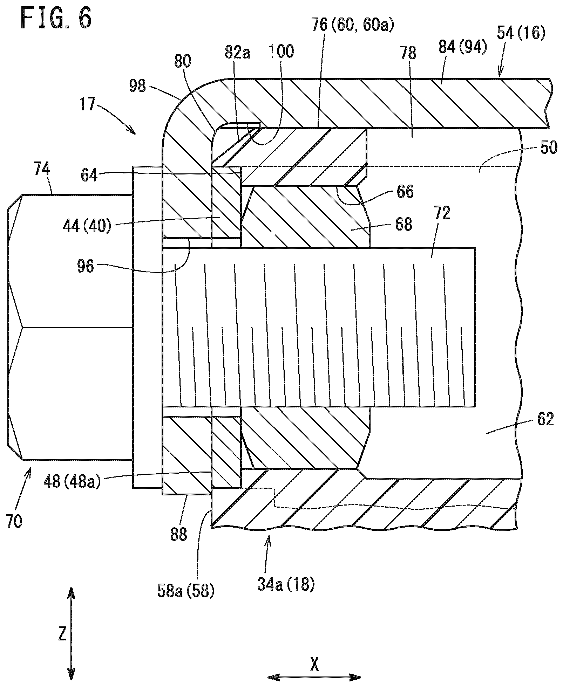

The cross-sectional shape of the notch portion 82 is not limited to an arc shape and may be a notch portion 82a that is an inclined surface formed by the corner portion 80 cut inward from the outer surface, as in the first pedestal 34a according to a modified example shown in FIG. 6. The notch portion 82a is inclined in a direction away from the corner portion 98 of the first intermediate connecting member 54. The notch portion 82a is inclined downward from the holding surface 60a of the holding portion 60 toward the fastening surface 58a.

As shown in FIGS. 3 and 4, the space portion 62 is a space that is placed in the direction of the harness 30a with respect to the fastening portion 58. The space portion 62 is provided between the first holding site 76 and the second holding site 78. The space portion 62 is a hollow portion formed to reduce the weight of the support member 18. The space portion 62 communicates with the hole portion 66 of the fastening portion 58. The threaded portion 72 of the fastening bolt 70 fastened to the fastening portion 58 is accommodated in the space portion 62. The space portion 62 opens upward in the axial direction (third direction) of the case 12.

As shown in FIG. 2, the intermediate connection portion 16 electrically connects the power connection portion 40 and the end portion 31 of the harness 30a, 30b connected to the battery management unit 28. The intermediate connecting portion 16 has a pair of first and second intermediate connecting members 54, 56. The first and second intermediate connecting members 54, 56 are formed by machining a metal plate material having a constant plate thickness.

The first and second intermediate connecting members 54, 56 are arranged along the first direction (arrow-X direction), which is the extending direction of the end portion 31 of the harness 30a, 30b. The first direction is a direction orthogonal to the second direction (arrow-Y direction), which is the extending direction of the support member 18.

As shown in FIG. 2, the first intermediate connecting member 54 is held by the first pedestal 34 of the support member 18. The first intermediate connecting member 54 electrically connects the end portion 31 of one harness 30a and the first connecting terminal 44 with each other. The second intermediate connecting member 56 is held by the second pedestal 36 of the support member 18. The second intermediate connecting member 56 electrically connects the end portion 31 of the other harness 30b and the second connecting terminal 46 with each other. In the second direction (arrow-Y direction) of the support member 18, the first intermediate connecting member 54 and the second intermediate connecting member 56 are symmetrical. Since the first intermediate connecting member 54 and the second intermediate connecting member 56 are symmetrical, it is possible to prevent the misassembling the support member 18 with respect to the first pedestal 34 and the second pedestal 36. The first intermediate connecting member 54 will be described below, and the detailed description of the second intermediate connecting member 56 will be omitted.

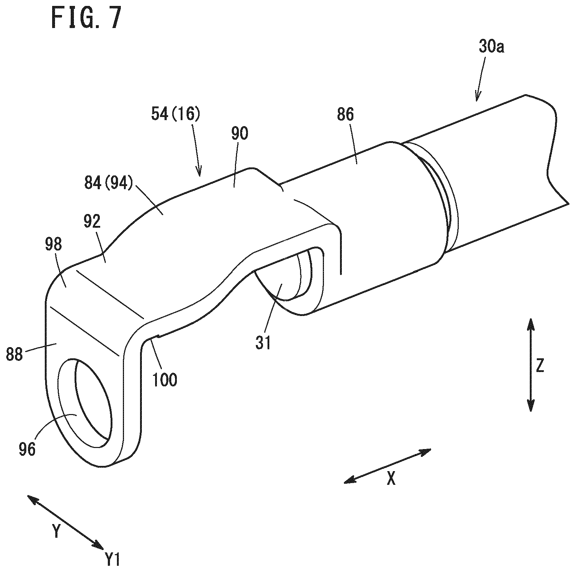

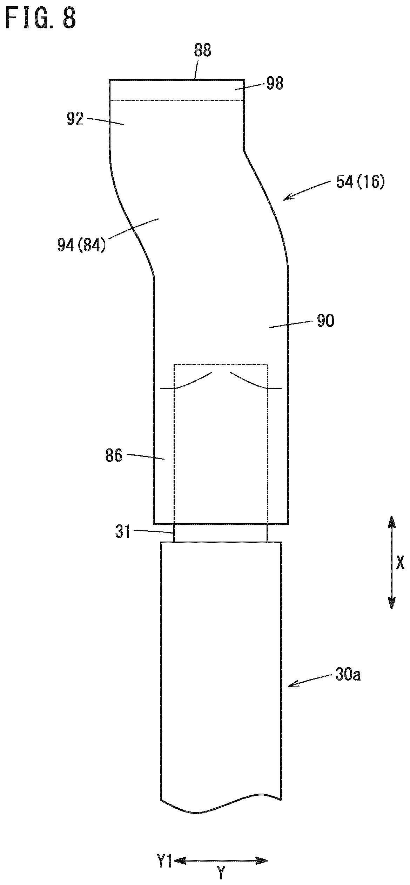

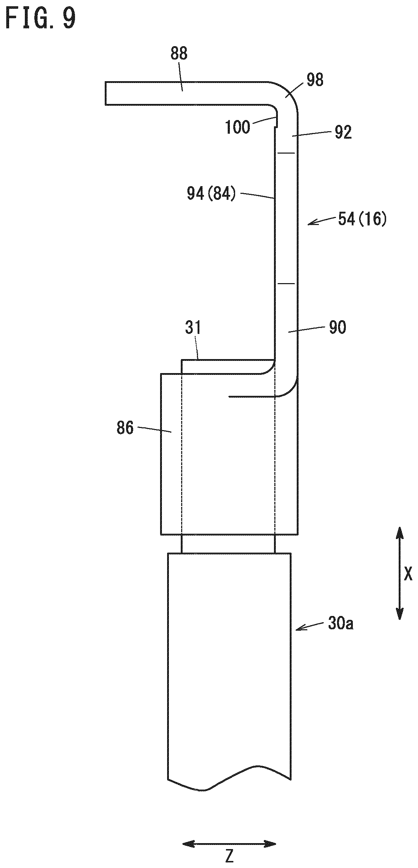

As shown in FIGS. 7 to 9, the first intermediate connecting member 54 has a body portion 84, a harness connecting portion 86, and a terminal connecting portion 88.

The main body 84 extends in a first direction (arrow-X direction), which is the extending direction of the end portion 31 of the harness 30a. The main body 84 has a flat shape along the width direction (second direction). The main body 84 has a constant plate thickness in the third direction (arrow-Z direction). As shown in FIG. 4, part of the main body 84 is held on the holding surface 60a, facing the holding portion 60 of the first pedestal 34. The main body 84 is formed with a constant width in the second direction.

As shown in FIGS. 4, 7 and 8, the main body 84 has a first extending end portion 90 at one end in the extending direction along the first direction. The first extending end portion 90 extends in the first direction and is connected to the harness connecting portion 86. The first extending end portion 90 is held in contact with the holding surface 60a of the first holding site 76 of the first pedestal 34 (see FIG. 3).

The other end of the main body 84 in the extending direction along the first direction is provided with a second extending end portion 92. The second extending end portion 92 extends along the first direction and is connected to the terminal connecting portion 88.

The terminal connecting portion 88 and the second extending end portion 92 are arranged to be shifted in the second direction (arrow-Y direction) of the support base 32 with respect to the harness connecting portion 86 and the first extending end portion 90. The shifted direction of the terminal connecting portion 88 and the second extending end portion 92 is a direction away from the second intermediate connecting member 56 (arrow-Y1 direction in FIG. 2).

As shown in FIG. 4, the main body 84 includes a shifting portion 94 between the first extending end portion 90 and the second extending end portion 92. The shifting portion 94 connects the first extended end portion 90 and the second extended end portion 92 shifted in the second direction (arrow-Y direction) and is formed in an oblique shape inclined with respect to the first direction.

When the first intermediate connecting member 54 is attached to the first pedestal 34, the second extending end portion 92 and a large portion of the shifting portion 94 face the space portion 62. When viewed from the axial direction of the case 12 shown in FIG. 4, part of widthwise inner sides of the second extending end portion 92 and the shifting portion 94, which face the direction toward the second intermediate connecting member 56, are held in contact with the holding surface 60a of the second holding site 78.

That is, the first extending end portion 90 of the main body 84 is placed in the first holding site 76 of the holding portion 60, and part of the shifting portion 94 and the second extending end portion 92 are placed in the second holding site 78 of the holding portion 60 (see FIG. 4). Thus, the main body 84 of the first intermediate connecting member 54 is held along the holding surface 60a of the holding portion 60.

The harness connecting portion 86 is formed in a cylindrical shape and extends along the first direction. When viewed from the axial direction of the case 12 shown in FIG. 4, the harness connecting portion 86 is arranged in parallel with the first direction (arrow-X direction), which is the extending direction of the end portions 31 of the harnesses 30a, 30b. The harness connecting portion 86 and the end portion 31 of the harness 30a are arranged linearly. The take-out position and the take-out direction of the end portion 31 of the harness 30a are determined by the battery management unit 28 to which the harness 30a (30b) is connected.

The end portion 31 of the harness 30a is inserted into the harness connection portion 86, and the harness connection portion 86 and the end portion 31 of the harness 30a are electrically connected. The harness connecting portion 86 and the end portion 31 of the harness 30a are linearly connected along the first direction (arrow-X direction).

As shown in FIGS. 3 and 5, the terminal connecting portion 88 is bent in the third direction (arrow-Z direction) with respect to the main body 84. That is, the terminal connecting portion 88 is bent in the plate thickness direction of the body portion 84. The terminal connecting portion 88 is formed perpendicularly downward from the second extending end portion 92 of the main body 84. The terminal connecting portion 88 is shifted in the second direction (arrow-Y1 direction) away from the second intermediate connecting member 56 with respect to the harness connecting portion 86. The terminal connecting portion 88 is arranged in parallel with the contact surface 48a of the first connecting terminal 44. The terminal connecting portion 88 and the contact surface 48a of the first connecting terminal 44 are in contact with each other and electrically connected.

As shown in FIGS. 3 and 5, the terminal connecting portion 88 has a bolt hole 96 in the center. The fastening bolt 70 is inserted into the bolt hole 96. The fastening bolt 70 is inserted into the bolt hole 96 and then the terminal connecting portion 88 is secured to the fastening portion 58 of the first pedestal 34 by the fastening bolt 70 from the first direction. At this time, the main body 84 is placed in contact with the holding surface 60a of the holding portion 60 (first and second holding sites 76, 78).

The curved corner portion 98 is provided between the terminal connecting portion 88 and the main body 84. When viewed from the second direction shown in FIG. 5, the cross-sectional shape of the corner portion 98 is an arc shape. When the first intermediate connecting member 54 is attached to the first pedestal 34, the corner portion 98 faces the corner portion 80. The inner surface of the corner portion 98 has a thin portion 100, which is dented in the plate thickness direction.

The thin portion 100 is formed through, for example, a striking process when the first intermediate connecting member 54 is press-formed. The thin portion 100 makes the thickness of the corner portion 98 thinner than the plate thicknesses of the terminal connecting portion 88 and the main body 84. The thin portion 100 may be formed by, for example, machining the inner surface of the corner portion 98.

When the first intermediate connecting member 54 is attached to the first pedestal 34, the thin portion 100 and the notch portion 82 prevent the corner portion 98 and the corner portion 80 from coming into contact with each other even if the inner surface of the corner portion 98 bulges inward due to a bending process (see FIG. 5).

As described above, in the embodiment of the present invention, by providing the shifting portions 94 on the first and second intermediate connecting members 54, 56 to which the end portions 31 of the harnesses 30a, 30b are connected, the first and second intermediate connecting members 54, 56 can be reliably connected to the first and second connecting terminals 44, 46 that are shifted in the second direction with respect to the end portions 31 of the harnesses 30a, 30b and are held by the first and second pedestals 34, 36. Since the main body 84 does not need to be flattened and notched in the second direction at the first and second intermediate connecting members 54, 56, a sufficient cross-sectional area through which electric current can pass can be secured. Therefore, it is possible to reliably pass the current from the battery core pack 14 to the first and second connecting terminals 44, 46 via the harnesses 30a, 30b and the first and second intermediate connecting members 54, 56, and to suppress the conduction resistance caused when the current flows.

This makes it possible to achieve both the connection of the first and second intermediate connecting members 54, 56 to the first and second connecting terminals 44, 46 and the securing of the current passing cross-sectional areas of the first and second intermediate connecting members 54, 56.

When a force is applied from the harnesses 30a, 30b to the harness connecting portion 86 in the rotational direction and a rotational moment is generated in the first and second intermediate connecting members 54, 56, the first and second connecting terminals 44, 46 connected to the first and second intermediate connecting members 54, 56 are prevented from being displaced in the rotational direction.

When viewed from the axial direction (third direction) of the case 12, part of the shifting portion 94 of the first and second intermediate connecting members 54 and 56 is disposed to be shifted in the second direction (arrow-Y direction) with respect to the space portion 62 and is held by the second holding site 78 of the holding portion 60. Thus, by placing the shifting portion 94 on the second holding site 78 of the holding portion 60, it is possible to hold the main body 84, which faces the space portion 62, on the first and second pedestals 34, 36 at the second holding site 78 in addition to the first holding site 76 stably in the third direction.

When the first and second intermediate connecting members 54, 56 are viewed from the third direction, the harness connecting portion 86 is formed in parallel with the first direction, which is the extending direction of the end portions 31 of the harnesses 30a, 30b. Therefore, when the end portions 31 of the harnesses 30a, 30b are connected to the harness connection portions 86, the end portions 31 of the harnesses 30a, 30b extending along the first direction can be connected to and taken out from the harness connection portions 86 smoothly without any difficulty.

In respect of the first and second intermediate connecting members 54, 56, the thin portions 100 make the plate thickness of the corner portion 98 thinner than the plate thicknesses of the terminal connecting portion 88 and the main body 84, whereby the terminal connecting portion 88 can be formed by easily bending the end portion of the main body 84.

In respect of the first and second intermediate connecting members 54, 56, it is possible to easily and reliably form the terminal connecting portion 88 by bending the terminal connecting portion 88 in the plate thickness direction (the third direction, the arrow-Z direction) of the main body 84 with respect to the main body 84.

The corner portion 80 of the first and second pedestals 34, 36 has an outer surface facing the corner portion 98 of the first and second intermediate connecting members 54, 56, and the outer surface has the notch portion 82 cut in a direction away from the corner portion 98. Thus, when the terminal connecting portions 88 of the first and second intermediate connecting members 54, 56 are connected to the first and second pedestals 34, 36 of the support member 18, respectively, the inner surface of the corner portion 98 is prevented from contacting the outer surface of the corner portion 80 by the notch portion 82 even if the inner surface of the corner portion 98 bulged inward at the bending process of the terminal connecting portion 88.

Thus, the terminal connecting portions 88 are not lifted from the fastening portions 58 of the first and second pedestals 34, 36 by the bulged corner portions 98, and the terminal connecting portion 88 can be securely fastened to the fastening surfaces 58a of the fastening portions 58.

In a first direction, which is the extending direction of the end portions 31 of the harness 30a, 30b, the fastening surfaces 58a of the first and second pedestals 34, 36 and the contact surfaces 48a of the first and second connecting terminals 44, 46 held by the fastening portions 58 are arranged to be flush with each other. Thus, by making the terminal connecting portions 88 of the first and second intermediate connecting members 54, 56 abut on the fastening surfaces 58a, it is possible to make the terminal connecting portions 88 abut on the contact surfaces 48a of the first and second connecting terminals 44, 46. Thus, the terminal connecting portions 88 and the first and second connecting terminals 44, 46 can be securely and stably connected and fastened.

## Claims

1. A battery pack (10) comprising:
a battery core pack (14) that includes a plurality of battery cells;
a case (12) that accommodates the battery core pack;
a connecting terminal (44, 46) that is arranged at one end of the case and is configured to be connected to an external device;
a support member (18) that is held by the case and supports the connecting terminal; and
an intermediate connecting member (54, 56) that is held by the support member and electrically connects the connecting terminal and a harness (30a, 30b) electrically connected to the battery core pack,
wherein
the intermediate connecting member is formed of a metal plate and includes
a main body (84) that extends in a first direction, which is an extending direction of an end portion (31) of the harness,
a harness connecting portion (86) that is formed at one end in an extending direction of the main body and to which the end portion of the harness is connected, and
a terminal connecting portion (88) that is formed at another end in the extending direction of the main body, is arranged to be shifted with respect to the end portion in a second direction orthogonal to the first direction, and is connected to the connecting terminal,
the main body has a flat shape along the second direction and includes
a first extending end portion (90) that extends along the first direction from the harness connecting portion toward the terminal connecting portion,
a second extending end portion (92) that extends in the first direction from the terminal connecting portion toward the harness connecting portion and is arranged to be shifted in the second direction with respect to the first extending end portion, and
a shifting portion (94) that connects the first extending end portion and the second extending end portion with each other, **characterized in that**:
the terminal connecting portion is secured in the first direction with respect to a pedestal (34, 36) of the support member with a fastening member (70), and wherein
the pedestal includes:
a fastening portion (58) including a fastening surface (58a) on which the terminal connecting portion abuts and is fastened in the first direction, and
a holding portion (60) that is orthogonal to the fastening surface of the fastening portion, extends along the first direction, and faces the main body.

2. The battery pack according to claim 1, wherein
the pedestal includes
a space portion (62) that is disposed in a direction of the harness connecting portion with respect to the fastening portion and opens in a third direction orthogonal to the second direction and along an axial direction of the case, and
when viewed from the third direction, part of the shifting portion is arranged to be shifted in the second direction with respect to the space portion and is placed on the holding portion.

3. The battery pack according to claim 2, wherein
the harness connecting portion is formed parallel to the first direction when the intermediate connecting member is viewed from the third direction.

4. The battery pack according to claim 2 or 3, wherein
the terminal connecting portion is formed to be bent in the third direction with respect to the main body,
between the terminal connecting portion and the main body, a corner portion (98) curving when viewed from the second direction is formed, and
a plate thickness of the corner portion is thinner than plate thicknesses of the terminal connecting portion and the main body.

5. The battery pack according to claim 4, wherein
the main body has the plate thickness in the third direction, and
the terminal connecting portion is bent in the third direction with respect to the main body.

6. The battery pack according to claim 5, wherein
the pedestal of the support member includes an outer surface (80) facing the corner portion, and the outer surface includes a notch portion (82, 82a) cut in a direction away from the corner portion.

7. The battery pack according to claim 6, wherein
in the first direction, the fastening surface of the fastening portion where the terminal connecting portion is fastened and a contact surface (48a) of the connecting terminal arranged at the fastening portion are arranged to be flush with each other.

## Patentansprüche

1. . Batteriepack (10), umfassend: ein Batteriekernpaket (14), das eine Vielzahl von Batteriezellen einschließt;
ein Gehäuse (12), das das Batteriekernpaket aufnimmt; ein schaltendes Endgerät (44, 46), das an einem Ende des Gehäuses angeordnet ist und ausgebildet ist, um an eine externe Vorrichtung geschaltet zu werden;
ein Stützelement (18), das von dem Gehäuse gehalten wird und das schaltende Endgerät stützt; und
ein Zwischenschaltelement (54, 56), das von dem Stützelement gehalten wird und das schaltende Endgerät und einen mit dem Batteriekernpaket elektrisch verbundenen Kabelbaum (30a, 30b) elektrisch schaltet, wobei
das Zwischenschaltelement aus einer Metallplatte gebildet ist und Folgendes einschließt:
einen Hauptkörper (84), der sich in eine erste Richtung erstreckt, die eine Erstreckungsrichtung eines Endabschnitts (31) des Kabelbaums ist,
einen Kabelbaum-Schaltabschnitt (86), der an einem Ende in einer Erstreckungsrichtung des Hauptkörpers gebildet ist und mit dem der Endabschnitt des Kabelbaums verbunden ist, und
ein Endgerät-Schaltabschnitt (88), der an einem anderen Ende in der Erstreckungsrichtung des Hauptkörpers gebildet ist, so angeordnet ist, dass er in Bezug auf den Endabschnitt in einer zweiten Richtung orthogonal zu der ersten Richtung verschoben werden kann und mit dem schaltenden Endgerät geschaltet ist,
der Hauptkörper entlang der zweiten Richtung eine flache Form aufweist und Folgendes einschließt:
einen ersten ausfahrenden Endabschnitt (90), der sich entlang der ersten Richtung von dem Kabelbaum-Schaltabschnitt zu dem Endgerät-Schaltabschnitt erstreckt,
einen zweiten ausfahrenden Abschnitt (92), der sich in der ersten Richtung von dem Endgerät-Schaltabschnitt zu dem Kabelbaum-Schaltabschnitt erstreckt und so angeordnet ist, dass er in der zweiten Richtung in Bezug auf den ersten ausfahrenden Abschnitt versetzt ist, und
einen verschiebenden Abschnitt (94), der den ersten ausfahrenden Endabschnitt und den zweiten ausfahrenden Endabschnitt miteinander schaltet, **dadurch gekennzeichnet, dass**:
der Endgerät-Schaltabschnitt in die erste Richtung in Bezug auf einen Sockel (34, 36) des Stützelements mit einem Befestigungselement (70) gesichert ist, wobei der Sockel Folgendes einschließt:
einen Befestigungsabschnitt (58), der eine Befestigungsfläche (58a) einschließt, an der der Endgerät-Schaltabschnitt anschlägt und in der ersten Richtung befestigt ist, und
einen Halteabschnitt (60), der orthogonal zu der Befestigungsfläche des Befestigungsabschnitts ist, sich entlang der ersten Richtung erstreckt und dem Hauptkörper zugewandt ist.

2. . Batteriepack nach Anspruch 1, wobei der Sockel Folgendes einschließt:
einen Raumabschnitt (62), der in einer Richtung des Kabelbaum-Schaltabschnitts in Bezug auf den Befestigungsabschnitt angeordnet ist und sich in einer dritten Richtung orthogonal zu der zweiten Richtung und entlang einer axialen Richtung des Gehäuses öffnet, und
aus der dritten Richtung betrachtet, einen Teil des verschiebenden Abschnitts so angeordnet ist, dass er in der zweiten Richtung in Bezug auf den Raumabschnitt versetzt ist und auf dem Halteabschnitt platziert ist.

3. . Batteriepack nach Anspruch 2, wobei der Kabelbaum-Schaltabschnitt parallel zu der ersten Richtung gebildet ist, wenn das Zwischenschaltelement von der dritten Richtung aus betrachtet wird.

4. . Batteriepack nach Anspruch 2 oder 3, wobei
der Endgerät-Schaltabschnitt in Bezug auf den Hauptkörper in die dritte Richtung gebogen ist, und zwischen dem Endgerät-Schaltabschnitt und dem Hauptkörper ein Eckabschnitt (98) gebildet ist, der aus der zweiten Richtung betrachtet eine Kurve aufweist, und
eine Plattendicke des Eckabschnitts dünner ist als die Plattendicken des Endgerät-Schaltabschnitts und des Hauptkörpers.

5. . Batteriepack nach Anspruch 4, wobei der Hauptkörper die Plattendicke in der dritten Richtung aufweist, und
der Endgerät-Schaltabschnitt in die dritte Richtung in Bezug auf den Hauptkörper gebogen ist.

6. . Batteriepack nach Anspruch 5, wobei die Basis des Stützelements eine äußere Fläche (80) einschließt, die dem Abschnitt der Ecke zugewandt ist, und die äußere Fläche eine Kerbe (82, 82a) aufweist, die in eine Richtung weg von dem Abschnitt der Ecke ausgeschnitten ist.

7. . Batteriepack nach Anspruch 6, wobei in der ersten Richtung die Befestigungsfläche des Befestigungsabschnitts, an dem der Endgerät-Schaltabschnitt befestigt ist, und eine Kontaktfläche (48a) des an dem Befestigungsabschnitt angeordneten Endgeräts bündig zueinander angeordnet sind.

## Revendications

1. Bloc-batterie (10) comprenant : un bloc-batterie central (14) qui inclut une pluralité de cellules de batterie ;
un boîtier (12) qui loge le bloc-batterie central ; une borne de connexion (44, 46) qui est agencée à une extrémité du boîtier et est configurée pour être connectée à un dispositif externe ;
un élément de support (18) qui est maintenu par le boîtier et supporte la borne de connexion ; et
un élément de connexion intermédiaire (54, 56) qui est maintenu par l'élément de support et connecte électriquement la borne de connexion et un faisceau (30a, 30b) connecté électriquement au bloc-batterie central, dans lequel
l'élément de connexion intermédiaire est formé d'une plaque métallique et inclut
un corps principal (84) qui s'étend dans une première direction, qui est une direction d'extension d'une portion d'extrémité (31) du faisceau,
une portion de connexion de faisceau (86) qui est formée à une extrémité dans une direction d'extension du corps principal et à laquelle la portion d'extrémité du faisceau est connectée, et
une portion de connexion (88) de borne qui est formée à une autre extrémité dans la direction d'extension du corps principal, est agencée pour être déplacée par rapport à la portion d'extrémité dans une deuxième direction orthogonale à la première direction, et est connectée à la borne de connexion,
le corps principal présente une forme plate le long de la deuxième direction et inclut
une première portion d'extrémité d'extension (90) qui s'étend le long de la première direction depuis la portion de connexion de faisceau vers la portion de connexion de borne,
une deuxième portion d'extrémité d'extension (92) qui s'étend dans la première direction depuis la portion de connexion de borne vers la portion de connexion de faisceau et est agencée pour être déplacée dans la deuxième direction par rapport à la première portion d'extrémité d'extension, et
une portion de déplacement (94) qui connecte entre elles la première portion d'extrémité d'extension et la deuxième portion d'extrémité d'extension, **caractérisé en ce que** :
la portion de connexion de borne est immobilisée dans la première direction par rapport à un socle (34, 36) de l'élément de support avec un élément de fixation (70), et dans lequel le socle inclut :
une portion de fixation (58) incluant une surface de fixation (58a) sur laquelle la portion de connexion de borne vient en butée et est fixée dans la première direction, et
une portion de maintien (60) qui est orthogonale à la surface de fixation de la portion de fixation, s'étend le long de la première direction, et fait face au corps principal.

2. Bloc-batterie selon la revendication 1, dans lequel le socle inclut
une portion spatiale (62) qui est disposée dans une direction de la portion de connexion de faisceau par rapport à la portion de fixation et s'ouvre dans une troisième direction orthogonale à la deuxième direction et le long d'une direction axiale du boîtier, et
lorsqu'elle est vue depuis la troisième direction, une partie de la portion de déplacement est agencée pour être déplacée dans la deuxième direction par rapport à la portion spatiale et est placée sur la portion de maintien.

3. Bloc-batterie selon la revendication 2, dans lequel la portion de connexion de faisceau est formée parallèlement à la première direction lorsque l'élément de connexion intermédiaire est vu depuis la troisième direction.

4. Bloc-batterie selon la revendication 2 ou la revendication 3, dans lequel
la portion de connexion de borne est formée pour être courbée dans la troisième direction par rapport au corps principal, entre la portion de connexion de borne et le corps principal, une portion d'angle (98) se courbant lorsqu'elle est vue depuis la deuxième direction est formée, et
une épaisseur de plaque de la portion d'angle est plus fine que les épaisseurs de plaque de la portion de connexion de borne et du corps principal.

5. Bloc-batterie selon la revendication 4, dans lequel le corps principal présente l'épaisseur de plaque dans la troisième direction, et
la portion de connexion de borne est courbée dans la troisième direction par rapport au corps principal.

6. Bloc-batterie selon la revendication 5, dans lequel le socle de l'élément de support inclut une surface externe (80) faisant face à la portion d'angle, et la surface externe inclut une portion d'encoche (82, 82a) découpée dans une direction éloignée de la portion d'angle.

7. Bloc-batterie selon la revendication 6, dans lequel, dans la première direction, la surface de fixation de la portion de fixation où la portion de connexion de borne est fixée et une surface de contact (48a) de la borne de connexion agencée au niveau de la portion de fixation sont agencées pour être au même niveau.
